# EUROPÄISCHE PATENTSCHRIFT

(11) **EP 1 023 156 B1**
(45) Veröffentlichungstag und Bekanntmachung des Hinweises auf die Patenterteilung: **04.12.2002**
(21) Anmeldenummer: 98948918.2
(22) Anmeldetag: 05.09.1998
(51) Int. Cl.: B29C 65/34, F16L 47/02, H01R 31/02

(54) **VORRICHTUNG ZUM ANSCHWEISSEN EINER ARMATUR AN EIN ROHR MITTELS IN DER ARMATUR INTEGRIERTER ELEKTRISCHER HEIZELEMENTE**
DEVICE FOR WELDING AN ACCESSORY ON A PIPE BY MEANS OF ELECTRICAL HEATING ELEMENTS INTEGRATED IN SAID ACCESSORY
DISPOSITIF POUR SOUDER UN ACCESSOIRE SUR UN TUYAU AU MOYEN D'ELEMENTS CHAUFFANTS ELECTRIQUES INTEGRES AUDIT ACCESSOIRE

(30) Priorität: 13.10.1997 DE 19745203
(43) Veröffentlichungstag der Anmeldung: 02.08.2000
(73) Patentinhaber: DA-Kunststoff GmbH, 42859 Remscheid (DE)
(72) Erfinder: SCHAFSTEIN, Jürgen, D-42859 Remscheid (DE); HINTZEN, Werner, D-50765 Köln (DE)
(74) Vertreter: Mentzel, Norbert, Dipl.-Phys.
(86) Internationale Anmeldenummer: EP9805648
(87) Internationale Veröffentlichungsnummer: WO99019135

(56) Entgegenhaltungen:
- EP-A- 0 146 775
- EP-A- 0 209 691
- EP-A- 0 253 966
- EP-A- 0 622 171
- DE-C- 3 411 179
- DE-U- 29 616 864
- FR-A- 2 516 439
- US-A- 5 137 591
- PATENT ABSTRACTS OF JAPAN vol. 095, no. 004, 31. Mai 1995 -& JP 07 009569 A (SEKISUI CHEM CO LTD), 13. Januar 1995
- PATENT ABSTRACTS OF JAPAN vol. 097, no. 007, 31. Juli 1997 -& JP 09 070895 A (HIRATA CORP;TOKUSHU KOGYO KK; II F TECHNO:KK; TOA KOUKIYUU KEISHIYU VA), 18. März 1997

## Beschreibung

Die Erfindung richtet sich auf eine Vorrichtung der im Oberbegriff angegebenen Art. Die an einem Rohr angeschweißte Armatur kann zur Verstärkung oder zur Reparatur eines defekten Rohres dienen. Die Segmente können fallweise einen Rohrstutzen aufweisen, der zum Anschluß von anderen Rohren an das mit der Armatur ausgerüstete Rohr dient. Schließlich kann eine solche Armatur auch zum Verbinden von zwei Rohren benutzt werden. Das Heizelement an den Innenflächen der Segmente wird durch den vom Schweißgerät kommenden elektrischen Strom erwärmt und verflüssigt das thermoplastische Material zwischen der Umfangsfläche des Rohres und der Innenfläche der Armatur. Nach dem Abkühlen und Erstarren der geschmolzenen Massen kommt eine feste Verbindung zwischen dem Rohr und der Armatur zustande.

Solche Armaturen sind aus der DE 296 16 864 U1 bekannt, wo zwei Segmente benutzt werden, die übereinstimmende Heizelemente aufweisen und daher zueinander identische elektrische Widerstände besitzen. Bel den bekannten Anschweißvorrichtungen wurden die beiden Heizelemente stets in elektrischer Reihenschaltung (Serienschaltung) an die elektrische Stromquelle des zugehörigen Schweißgerätes angeschlossen. Das geschah dadurch, daß man die vom Schweißgerät kommenden Anschlußleitungen mit ihren elektrischen Gegenkupplüngsgliedern an zwei an den beiden Segmenten der Armatur befindliche Kupplungsglieder elektrisch kontaktierte, aber die beiden weiteren Kuppelglieder der Segmente über eine Verbindungsleitung miteinander kontaktierte. Das bringt erhebliche Nachteile.

Weil die Heizelemente nacheinander vom Strom durchflossen werden, ergibt sich eine verhältnismäßig lange Schweißzeit, bis die erforderliche Plastifizierung des Materials an der Berührungsstelle zwischen dem Rohr und der Armatur eingetreten ist. Wegen der Länge der Schweißzeit hat aber die im Heizelement der. Armatur erzeugte Wärme ausreichend Zeit, von der Schweißzone aus sowohl in das Material der Armatur als auch des Rohres abzufließen. Man.muß daher bei der bekannten Vorrichtung mehr Energie für die Plastifizierung des Materials aufwenden, um die durch Wärmeleitung eintretenden Energieverluste auszugleichen. Das bedeutet einen über das eigentliche Schweißen hinaus größeren Energieaufwand, was zu entsprechend hohen Energiekosten führt. Weiterhin besteht durch die wegwandernde Wärme die Gefahr einer unzureichenden Verschweißung der Segmente der Armatur sowohl untereinander als auch gegenüber dem Rohr.

Eine den Energieaufwand vermindernde Anordnung zum Verschweißen von hälftenartigen Formteilen aus thermoplastischem Material ist aus der EP-A-0 146 775 bekannt geworden. Dabei ist ein einzuschweißender Bauteil zwischen diese Bauteile eingefügt, deren innere Flächen zwei als Heizmatten ausgebildete Heizleiter aufweisen, die zueinander parallel geschaltet, sind. Die aus den Formteilen ausragenden Enden der Heizleiter sind entfernt von den Formteilen zu jeweils einem Stromanschluß zusammengefaßt. Abgesehen davon, daß eine derartige Verdrahtung aufwendig ist, lassen sich Verwechslungen der ausragenden Heizleiterenden nicht ausschließen.

Aus der EP-A-0 209 691 ist eine Verbindungsvorrichtung für die elektrische Verbindung von Anschlüssen von Elektrogeräten bekannt geworden, bei der die unterschiedlichen Steckanschlüsse der Elektrogeräte mit entsprechenden Steckanschlüssen an den Kabelenden von Anschlußkabeln verbindbar sein sollen. Dabei werden die Anschlußkabel mit ein und denselben Steckanschlüssen für eine Vielzahl - zumindest eine ausgewählte Gruppe - von denkbaren Verbindungen zwischen Elektrogeräten verwendet, wozu Kodierungselemente erforderlich sind.

Dadurch ist es zwar möglich, mit einer geringen Anzahl von Anschlußkabeln eine Vielzahl unterschiedlicher elektrischer Verbindungen herzustellen, die jedoch die Verwechslungsgefahr nicht ausschließen können. Außerdem dienen diese Anschlußkabel der Verbindung unterschiedlicher Elektrogeräte, wie Teilen einer Rundfunk-Stereoanlage, und nicht dem Verschweißen thermoplastischen Materials.

Der Erfindung liegt die Aufgabe zugrunde, eine zuverlässige Vorrichtung der im Oberbegriff des Anspruches 1 genannten Art zu entwickeln, mit der einerseits einwandfreie Schweißverbindungen mit geringem Energieaufwand möglich sind, und bei der andererseits die einzelnen Kupplungsglieder verwechslungssicher gestaltet sind. Dies wird erfindungsgemäß durch die im Kennzeichen des Anspruches 1 angegebenen Maßnahmen erreicht, denen folgende besondere Bedeutung zukommt.

Die erfindungsgemäße Vorrichtung verwendet eine elektrische Parallelschaltung der Heizelemente der Armatur. Das verkürzt die an den Berührungsflächen der Segmente und des Rohres erforderliche Schweißzeit zur Plastifizierung der benötigten Schmelzmassen. Die kurze Schweißzeit verhindert eine Diffusion der an den Heizelementen anfallenden Wärme im Material der Segmente und des Rohres. Man kommt daher mit einer geringen Wärmemenge aus. Diese Parallelschaltung erreicht die Erfindung, indem sie die beiden Anschlußleitungen zunächst mit zwei unabhängigen Verbindungsleitungen verbindet und dadurch zwei Leitungskombinationen aus einer Anschlußleitung und einer Verbindungsleitung erhält. Erst die beiden Leitungskombinationen tragen die beiden Gegenkupplungsglieder, welche jeweils mit den Kuppelgliedern zweier unterschiedlicher Segmente elektrisch kontaktiert werden. Dabei sind die beiden Kupplungsglieder eines jeden Segmentes unterschiedlich gestaltet, die mit entsprechend gestalteten Gegenkupplungsgliedern der Leitungskombinationen verwechslungsfrei verbindbar sind. Es empfiehlt sich dabei, identische Segmente in der Armatur zu verwenden, die somit gleiche elektrische Heizelemente beinhalten. Man erhält dadurch identische elektrische Widerstände in den beiden Zweigen der Parallelschaltung, was zu einer idealen gleichförmigen Schweißverbindung zwischen der Armatur und dem Rohr führt.

Weitere Maßnahmen und Vorteile der Erfindung ergeben sich aus den Unteransprüchen, der Beschreibung und den Zeichnungen. In den Zeichnungen ist die Erfindung in mehreren Ausführungsbeispielen dargestellt. Es zeigen:
- Fig. 1,: schematisch, die Seitenansicht der erfindungsgemäßen Vorrichtung, im Entkupplungszustand der diversen Kuppel- und Gegenkupplungsglieder an den elektrischen Leitungen,
- Fig. 2: einen Querschnitt durch die am Rohr montierte Armatur der Vorrichtung längs der Schnittlinie II-II von Fig. 1, vor der elektrischen Kontaktierung der Gegenkupplungsglieder,
- Fig. 3: das elektrische Schaltbild für die Vorrichtung von Fig. 1,
- Fig. 4,: schematisch, ein Detail von Fig. 1 in einer alternativen Ausführung,
- Fig. 5,: in bruchstückweiser Darstellung, zwei zu einer Baueinheit miteinander verbundene Verbindungsleitungen der in Fig. 1 gezeigten Vorrichtung, wenn diese gemäß dem Schema von Fig. 4 ausgebildet sind,
- Fig. 6: in perspektivischer Darstellung das eine Kuppelglied an der Verbindungsleitung von Fig. 5,
- Fig. 7a und 7b,: in Hinter- und Vorderansicht, die perspektivische Darstellung eines an der Verbindungsleitung von Fig. 5 vorgesehenen Kuppelgliedpaares und
- Fig. 8: in perspektivischer Darstellung den kombinierten elektrischen Kontaktteil für das in Fig. 7a bzw. 7b gezeigte Kuppelgliedpaar.

Die erfindungsgemäße Vorrichtung umfaßt zunächst eine Armatur 10, die dazu dient, ein Rohr 11 an einer bestimmten Stelle an dessen Umfangsfläche 12 zu verbinden. Das Rohr besteht aus thermoplastischem Kunststoffmaterial. Die Armatur 10 ist aus Segmenten 13 zusammengesetzt, von denen im vorliegenden Fall zwei identische Segmente 13 benutzt werden. Diese Segmente 13 werden am Rohrumfang durch Spannmittel 14 festgehalten, z. B. Schrauben und Muttern, die zwei an den Segmenten 13 vorgesehene Flansche 15 gegeneinander drücken.

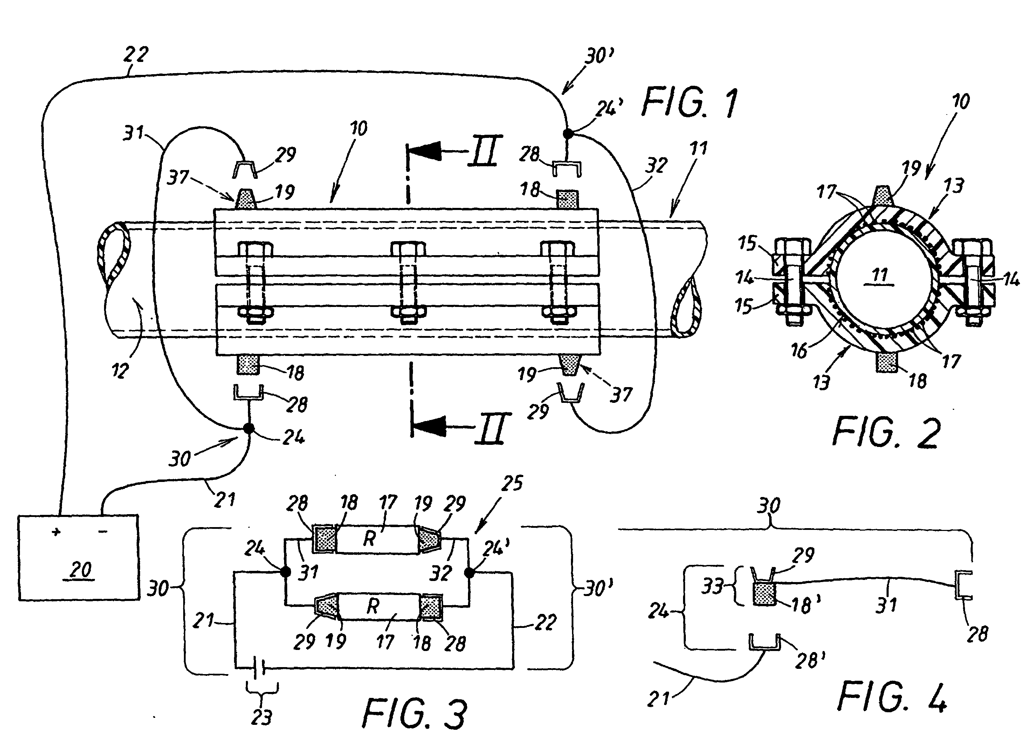

Die Segmente 13 besitzen an ihren mit der Rohrum fangsfläche 12 in Berührung kommende Innenflächen 16, wie aus Fig. 2 zu entnehmen ist, Heizelemente 17. Die Segmente 13 bestehen aus thermoplastischem Kunststoff, wo die Heizelemente 17 in der Innenfläche 16 bei der Segmentherstellung Integriert werden. Diese Heizelemente 17, die aus gewendeltem oder mäanderförmigem Draht bestehen, führen zu metallischen Kontaktteilen, welche zu jeweils zwei an der Außenfläche der Segmente 13 sitzenden Kuppelgliedern 18, 19 gehören. Diese Kuppelgieder haben elektrische Isolationsteile, die aus dem Kunststoffmaterial der Segmente 13 mit ausgeformt sind und die metallischen Kontaktteile zwar schützen, aber für eine Steckverbindung mit noch näher zu beschreibenden metallischen Gegenkontaktteilen 26, 27 zweier Gegenkupplungsglieder 28, 29 zugänglich sind.

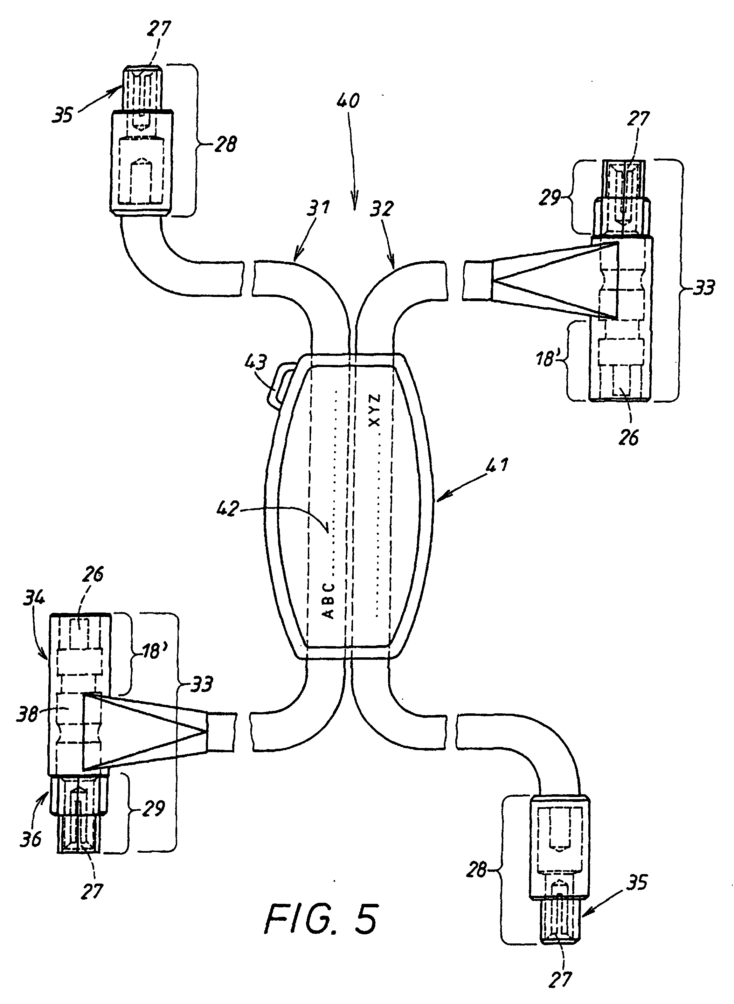

Weil beide Segmente 13 formgleich sind und übereinstimmende elektrische Heizelemente 17 besitzen, weisen die Heizelemente 17, die in Fig. 3 schematisch gezeigt sind, einen identischen elektrischen Widerstand R auf. Fig. 3 zeigt ihre Parallelschaltung 25. Die metallischen Kontaktteile der beiden Kuppelglieder 18,19 haben mindestens nach ihrer elektrischen Kontaktierung mit den metallischen Gegenkontaktteilen 26, 27 der Gegenkupplungsglieder 28, 29 summativ den gleichen Widerstand. Im vorliegenden Fall aber sind die metallischen Kontaktteile der beiden Kuppelglieder 18, 19 zueinander identisch; die Kuppelglieder 18, 19 unterscheiden sich nämlich lediglich in den Profilformen 34, 36 ihrer elektrischen Isolationsteile. Das Kuppelglied 18 besitzt ein an sich bekanntes, gängiges Normprofil 34, dagegen das Kuppelglied 39 ein Sonderprofil 36, was anhand der Fig. 5 noch näher beschrieben werden wird.

Zu der erfindungsgemäßen Vorrichtung gehört aber noch, wie im Schema von Fig. 1 zu erkennen ist, ein Schweißgerät 20, das von konventioneller Art sein kann. Das Schweißgerät 20 dient als im Schaltbild von Fig. 3 verdeutlichte Stromquelle 23, deren beide Pole mit zwei elektrischen Anschlußleitungen 21, 22 verbunden sind. Im Ausführungsbeispiel von Fig. 1 enden diese beiden Anschlußleitungen 21, 22 an Verbindungsstellen 24, 25 für zwei eigenständige Verbindungsleitungen 31, 32. Dadurch entstehen aus jedem Paar von elektrischen Anschlußleitungen 21 bzw. 22 einerseits und Verbindungsleitungen 31, 32 andererseits zwei Leitungskombihationen 30, 30'.

Wie aus Fig. 1 zu erkennen ist, haben beide Leitungskomblnationen 30, 30' übereinstimmende Enden; sie sind mit den bereits angesprochenen Gegenkupplungsgliedern 28, 29 versehen. Jede der beiden Leitungskombinationen 30, 30' besitzt einen Gegenkupplungstell 28 mit Normalprofil und einen Gegenkupplungsteil 29 mit Sonderprofil 36. Das wird, wie gesagt, in Fig. 5 näher beschrieben.

Der Kupplungszustand der elektrischen Glieder 18, 19 mit 28, 29 ist im Schaltbild von Fig. 3 gezeigt. Dort sind die Kunststoffteile der Segmente 13 ebenso weggelassen wie das Kunststoffrohr 11. Man sieht, daß die Heizelemente 17 der beiden Segmente durch die Leitungskombinationen 30, 30' miteinander parallel geschaltet sind. Weil, wie bereits erwähnt wurde, die elektrischen Widerstände R sowohl der beiden Heizelemente 17 als auch der paarweise miteinander kontaktierten Glieder 18, 28 und 19, 29 identisch sind, fließt in beiden Zweigen der gleiche Strom. Dieser Strom ist gegenüber der konventionellen Reihenschaltung der Heizelemente bei gleichen Bedingungen zweimal so groß. Das bedeutet, daß die Heizelemente 17 In einem gegebenen Zeitintervall die vierfache Heizenergie im Vergleich mit dem Stand der Technik erhalten. Ziel der Erwärmung der Heizelemente 17 ist, an den Berührungsstellen 12, 16 zwischen der Armatur 10 und dem Rohr 11 die thermoplastischen Materialien zu verflüssigen. Weil dies gegenüber den bekannten Vorrichtungen bei der Erfindung in etwa einem Viertel der Zeit erreicht wird, kann die Wärme nicht In weitere, unerwünschte Bereiche des Materials von der Armatur 10 und dem Rohr 11 abwandern, sondern bleibt im wesentlichen auf die Berührungsflächen 12, 16 konzentriert. Das thermoplastische Material der Armatur 10 und des Rohres 11 sind zwar an sich schlechte Wärmeleiter, doch macht sich im Laufe der Zeit ein merklicher Wärmeverlust durch Wärmeleltung bemerkbar. Man erhält damit bei der Erfindung nicht nur ein schnelleres Schweißergebnis, sondern benötigt auch weniger Heizenergie. Durch die schnellere Verflüssigung des thermoplastischen Materials ergibt sich auch ein besseres Schweißergebnis; die Schweißverbindung zwischen der Armatur 10 und dem Rohr 11 ist optimal.

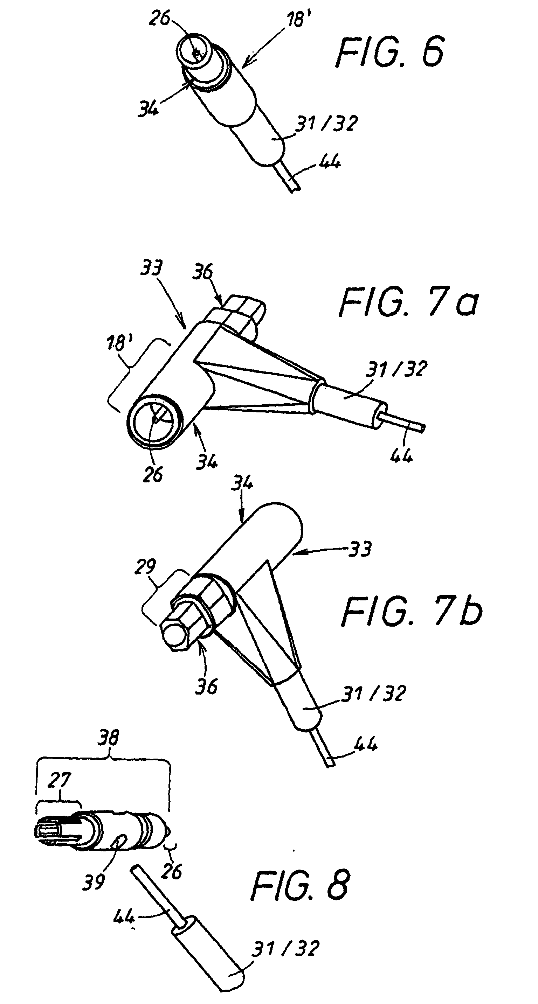

Fig. 4 zeigt eine sehr vorteilhafte Ausbildung der in Fig. 1 angedeuteten Verbindungsstellen 24, 24' der an sich übereinstimmend gestalteten beiden Leitungskombinationen 30, 30'. Das soll anhand der einen Leitungskombination 30 näher erläutert werden. Die in Fig. 4 gezeigte Verbindungsleitung 31 besitzt außer den beiden beschriebenen Gegenkupplungsgliedern 28, 29 auch noch ein Kuppelglied 18', mit welchem ein an der zugehörigen elektrischen Anschlußleitung 21 des Schweißgerätes 20 befindliches Gegenkupplungsglied 28' elektrisch kontaktierbar ist. Die beiden Glieder 18', 28' sind kompatibel und besitzen für das Glied 18' ein in Fig. 5 erkennbares Normalprofil 34. Wie bereits erwähnt wurde, gründet sich die fehlende Kompabilität zusammengehöriger Glieder 18, 28 bzw. 19, 29 auf unterschiedlichen Profilformen ihrer Isolationsteile. Das Normalprofil 34 am Kuppelglied 18' ist, wie aus insbesondere Fig. 7a zu ersehen ist, eine zylindrische Steckmatrize, die ein steckerartiges Kontaktteil 26 mit Radialabstand umschließt.

Eine weitere Besonderheit der in Fig. 4 gezeigten Verbindungsleitung besteht darin, daß das vorerwähnte Kuppelglied 18' zusammen mit dem einen Gegenkupplungsglied 29 zu einem besonderen Kuppelglied-Paar 33 kombiniert ist. Das ist im Ausführungsbeispiel von Fig. 5 näher konkretisiert. Am anderen Ende der Verbindungsleitung 31 von Fig. 4 befindet sich das Gegenkupplungsglied 28, das ebenfalls ein hier zylindrisches Normalprofil 35 besitzt. Dieses Normalprofil 35 ist zu dem vorbeschriebenen zylindrischen, steckmatrizenartigen Normalprofil 34 am Kuppelglied-Paar 33 komplementär; es besteht aus einer zylindrischen Steckpatrize 35, die einen buchsenartigen metallischen Kontaktteil 27 ummantelt, dessen Aussehen in Fig. 8 zu erkennen ist.

Die beiden Normalprofile 34, 35 an den Verbindungsleitungen 31, 32 von Fig. 5 sind zueinander komplementär, auch wenn sie im Gebrauchsfall nicht miteinander in Eingriff kommen. Das bereits oben erwähnte, aus dem Kunststoffmaterial des Segments 13 geformte Kuppelglied 18 besitzt aber das gleiche Normalprofil 34 wie bei 18' von Fig. 5. Das ist in Fig. 1 durch das Bezugszeichen 34 veranschaulicht. Auch im Kuppelglied 18 des Segments 13 befindet sich, was nicht näher gezeigt ist, ein steckerförmiger Kontaktteil, der von einer zylindrischen Steckmatrize umhüllt wird. Daher ist, wie In Fig. 1 gezeigt, das segmentseitige Kuppelglied 18 mit dem in Fig. 4 und 5 gezeigten Gegenkupplungsglied 28 der Verbindungsleitung 31 kompatibel. Ebenso besitzt das bei der Alternative von Fig. 4 an der elektrischen Anschlußleitung 21 des Schweißgerätes 20 sitzende Gegenkupplungsglied 28' die zylindrische Profilform der Steckpatrize 35 vom vorbeschriebenen Gegenkupplungsglied 28 der Fig. 5.

Dieses Normalprofil 35 ist die bekannte Profilform der Gegenkupplungsteile an den Anschlußleitungen 21, 22 der zum Stand der Technik gehörenden Schweißgeräte 20. Diese Profilformen 35 der Gegenkupplungsglieder 28' sind bei den Schweißgeräten 20 genormt. Damit können die auf dem Markt befindlichen üblichen Schweißgeräte mit den erfindungsgemäß gestalteten besonderen Verbindungsleitungen 31, 32 ausgerüstet und zum Aufbau der erfindungsgemäßen Vorrichtung von Fig. 1 ohne weiteres genutzt werden. Es ist lediglich erforderlich, die mit den profilunterschiedlichen Kuppelgliedern 18, 19 versehenen besonderen Segmente 13 herzustellen. Diese können dann narrensicher mit den Verbindungsleitungen 31, 32 von Fig. 4 verbunden werden. Fehlschaltungen durch unerfahrenes Bedienungspersonal sind damit grundsätzlich ausgeschlossen.

Ausweislich der Fig. 8 liegt eine einstückige Verbindung zwischen den beiden als Stecker 26 und als Buchse 27 gestalteten Kontaktteile vor. Sie sind als die beiden Enden eines zusammenhängenden Metallkörpers 38 gestaltet, der in seinem Mittelabschnitt eine Anschlußstelle 39 für den elektrischen Leiter 44 am Ende der Verbindungsleitung 31 aufweist. Diese Anschlußstelle 39 besteht einfach aus einer Querbohrung, in welche das Leiterende 44 des Kabels eingesteckt wird. Zur einwandfreien Kontaktierung kann hier eine Lötverbindung od. dgl. dienen.

Das vorerwähnte Sonderprofil 36 am Gegenkupplungsglied 29 des Kuppelglied-Paares 33 von Fig. 5 besteht im Ausführungsbeisplel aus einem Kantenprofil, insbesondere aus einem aus Fig. 7b ersichtlichen Sechskantprofil, das zur Erhöhung der Sicherheit gegenüber Fehlkontaktierungen beim Kuppeln in sich gestuft ist. Dieses Sonderprofil 36 umschließt, wie bereits erwähnt wurde, mantelartig den buchsenartigen Kontaktteil 27 des einstückigen Metallkörpers 38 und ist damit, analog zum Normalprofil 35 des vorbeschriebenen Gegenkupplungsglieds 28, eine profilierte Steckpatrize. Die dazu komplementäre, profilierte Steckmatrlze 37 dieses Sonderpröfils ist zwar körperlich nicht gezeigt, aber in Fig. I wenigstens durch ein Bezugszeichen verdeutlicht. Der -elektrisch Isolierende Bestandteil des am Segment 13 sitzenden weiteren Kuppelglieds 19 hat dieses Sonderptofil 37.

Wie aus Fig. 5 bis 7b zu erkennen ist, sind das Gegenkupplungsglied 28 einerends und das Kuppelglied-Paar 33 andererends mit ihren vorbeschriebenen Normal- bzw. Sonderprofilen 34 bis 36 an die elektrische Verbindungsleitung 31 angespritzt und damit von vorneherein einstückig. Auch das Gegenkupplungsglied 28 am anderen Leitungsende 31 ist so angespritzt. Aus Fig. 5 ist ferner zu erkennen, daß die so konfektionierten beiden Verbindungsleitungen 31 mit der zweiten Verbindungsleitung 32 identisch sind.

Von großem Vorteil für die Handhabung ist es nun, wie ebenfalls aus Fig. 5 hervorgeht, diese beiden Leitungen 31, 32 zu einer Baueinheit 40 zusammenzufassen. Zur Unterscheidung der beiden Leitungen 31, 32 können diese und/oder ihre endseitigen Glieder 28, 33 farbunterschiedlich gestaltet sein. Der Zusammenhalt dieser beiden Leitungen 31, 32 kommt durch einen einfachen Verbinder 41 zustande, der zugleich Träger eines Beschriftungsfeldes 42 ist. Auf diesem Beschriftungsfeld 42 können, in unverlierbarer Weise, die erforderlichen Informationen über die Herkunft, die Dimensionierung und den Aufbau und/oder die Benutzung dieser Baueinheit 40 In der Vorrichtung enthalten sein. Der Verbinder 41 kann schließlich auch Anbringungsstellen 43, z. B. Ösen, zum Anbringen von nicht näher gezeigten Aufhängern besitzen, welche ihrerseits ähnliche oder ergänzende Informationen zu der erfindungsgemäßen Vorrichtung enthalten.

### Bezugszeichenliste:

- 10: Armatur
- 11: Rohr
- 12: Umfangsfläche von 11, Berührungsfläche
- 13: Segment von 10
- 14: Spannmittel an 13
- 15: Flansch an 13
- 16: Innenfläche von 13, Berührungsfläche
- 17: Heizelement in 13
- 18: erstes Kuppelglied an 13 mit Normalprofil
- 18': Kuppelglied an 33 mit Normalprofil
- 19: zweites Kuppelglied an 13 mit Sonderprofil
- 20: Schweißgerät
- 21: erste elektrische Anschlußleitung von 20
- 22: zweite elektrische Anschlußleitung von 20
- 23: Stromquelle in 20
- 24: Verbindungsstelle zwischen 21, 31 für 30
- 24': zweite Verbindungsstelle zwischen 22, 32 für 30'
- 25: Parallelschaltung von 17 (Fig. 3)
- 26: steckerartiger, metallischer Kontaktteil in 18'
- 27: buchsenartiger metallischer Kontaktteil von 29 bzw. 28
- 28: Gegenkupplungsglied an 31 bzw. 30 mit Normalprofil
- 28': Gegenkupplungsglied an 21 mit Normalprofil (Fig. 4)
- 29: Gegenkupplungsglied von 33 bzw. an 31, 32 mit Sonderprofil
- 30: Leitungskombination aus 21, 31
- 30': Leitungskombination aus 22, 32
- 31: erste Verbindungsleitung an 21 für 30
- 32: zweite Verbindungsleitung an 22 für 30'
- 33: Kuppelglied-Paar aus 18', 29 (Fig. 4)
- 34: zylindrische Steckmatrize mit Normalprofil von 18'
- 35: zylindrische Steckpatrize mit Normalprofil von 28
- 36: profilierte Steckpatrize mit Sonderprofil von 29
- 37: profilierte Steckmatrize mit Sonderprofil bei 19 (Fig. 1)
- 38: Metallkörper für 33 (Fig. 8)
- 39: Anschlußstelle für 44 in 38 (Fig. 8)
- 40: Baueinheit aus 31, 32 (Fig. 5)
- 41: Verbinder für 40
- 42: Beschriftungsfeld von 41
- 43: Anbringungsstelle, Öse an 41
- 44: elektrischer Leiter von 31 bzw. 32

- R: elektrischer Widerstand von 17

## Patentansprüche

1. Vorrichtung zum Anschweißen einer aus thermoplastischem Material bestehenden Armatur (10) an ein Rohr (11) oder an zwei miteinander zu verbindende Rohre aus thermoplastischem Werkstoff,
wobei die Armatur (10) mindestens zwei Segmente (13) besitzt, die den Umfang (12) des Rohres (11) bzw. der beiden zu verbindenden Rohre umfassen,
die Segmente (13) an ihren mit dem Rohr (11) bzw. den beiden zu verbindenden Rohren in Berührung stehenden Innenflächen (16) wenigstens bereichsweise mit einem elektrischen Heizelement (17) versehen sind,
wobei die Segmente (13) mit einem als elektrische Stromquelle (23) für die Heizelemente (17) dienenden Schweißgerät (20) über zwei elektrische Anschlußleitungen (21,22) verbunden sind,
und jede der beiden Anschlußleitungen (21,22) mit je einer von zwei Verbindungsleitungen (31,32) an Verbindungsstellen (24,24') gekoppelt ist und mit diesen eine Leitungskombination (30,30') für eine elektrische Parallelschaltung aller Heizelemente (17) in der Armatur (10) bildet,
**dadurch gekennzeichnet,**
**daß** die Segmente (13) an ihren Außenflächen zwei elektrische Kuppelglieder (18,19) zum Zuführen und Ableiten eines elektrischen Stroms an das Heizelement (17) mittels der Gegenkupplungsglieder (28,29) tragenden Leitungskombination (30,30') aufweisen, und die Gegenkupplungsglieder (28,29) mit den Kuppelguedern (18,19) unterschiedlicher Segmente (13) der Armatur (10) kontaktiert sind, wobei die Kuppelglieder (18,19) und die Gegenkupplungsglieder (28,29) zueinander unterschiedlich ausgebildet und miteinander nicht kompatibel sind.

2. Vorrichtung nach Anspruch 1, **dadurch gekennzeichnet, daß** die Verbindungsleitung (31, 32) außer den beiden Gegenkupplungselementen (28, 29) noch ein weiteres Kuppelglied (18') besitzt, mit welchem ein Gegenkupplungsglied (28') der Anschlußleitung (21, 22) des Schweißgerätes (20) beim Schweißvorgang kontaktiert ist,
und daß dadurch die Verbindung (24, 25) der Verbindungsleitung (31, 32) mit der Anschlußleitung (21, 22) zur Leitungskombination (30, 30') erzeugt ist.

3. Vorrichtung nach Anspruch 2, **dadurch gekennzeichnet, daß** die Verbindungsleitung (31, 32) zwar an ihrem einen Ende ein Gegenkupplungsglied (28), aber an ihrem anderen Ende ein kombiniertes Kuppelglied-Paar (33) trägt, bestehend einerseits aus einem Gegenkuppelglied (29) für das Segment (13) und andererseits aus einem Kuppelglied (18') für die Anschlußleitung (21, 22).

4. Vorrichtung nach einem oder mehreren der Ansprüche 2 bis 3, **dadurch gekennzeichnet, daß** das weitere Kuppelglied (18') und das Gegenkupplungsglied (29) der Verbindungsleitung (31, 32) sowie das eine Kuppelglied (18) am Segment (13) und das Gegenkupplungsglied (28') an jeder der beiden Anschlußleitungen (21, 22) ein an sich bekanntes Normprofil (34,35) aurweisen,
daß aber das andere Gegenkupplungsglied (29) der Verbindung (24) sowie das andere Kuppelglied (19) am Segment (13) ein Sonderprofil (36, 37) besitzen.

5. Vorrichtung nach einem oder mehreren der Ansprüche 1 bis 4, **dadurch gekennzeichnet, daß** die beiden Verbindungsleitungen (31, 32) für die aus zwei Segmenten (13) bestehende Armatur (10) zu einer Baueinheit (40) zusammengefaßt sind.

6. Vorricbtung nach einem oder mehreren der Ansprüche 1 bis 5, **dadurch gekennzeichnet, daß** die beiden Verbindungsleitungen (31, 32) für die aus zwei Segmenten (13) bestehende Armatur (10) und/oder ihre endseitigen Glieder (28, 29; 33) zwecks optischer Unterscheidung zueinander unterschiedlich, insbesondere farbunterschiedlich ausgebildet sind.

7. Vorrichtung nach Anspruch 5 oder 6, **dadurch gekennzeichnet, daß** die Baueinheit (40) der zusammengefaßten Verbindungsleitungen (31, 32) mit einem Schriftfeld (42) für Informationen und/oder mit Anbringungsstellen (43) für einen Aufhänser mit Informationen ausgerüstet ist.

8. Vorrichtung nach einem oder mehreren der Ansprüche 3 bis 7, **dadurch gekennzeichnet, daß** die metallischen Kontaktteile (26) in den beiden unterschiedlichen Kuppeigliedern (18, 19) des Segments (13) zusammen mit den metallischen Gegenkontakten (27) der mit ihnen kontaktierten Gegenkupplungsglieder (28, 29) an der Leitungskombination (30, 30') zumindest summativ jeweils den gleichen elektrischen Widerstand zueinander aufweisen.

9. Vorrichtung nach Anspruch 8, **dadurch gekennzeichnet, daß** die aus dem Kunststoffmaterial des Segments (13) gebildeten Isolationsteile an den Kuppelgliedem (18, 19) des Segments (13) einerseits und die Isolationsteile der Gegenkupplungsglieder (28, 29) an der Leitungskombination (30, 30') andererseits zwar zueinander unterschiedliche Profilformen (34 bis 37) aufweisen, die aber paarweise (34, 35 bzw. 36, 37) miteinander zusammensteckbar sind.

## Claims

1. Device for welding an accessory (10) consisting of thermoplastic material to a pipe (11) or to two pipes of thermoplastic material to be connected to one another,
wherein the accessory (10) has at least two segments (13) embracing the circumference (12) of the pipe (11) or of the two pipes to be connected,
the segments (13) are provided at least partially with an electrical heating element (17) on their inner surfaces (16) in contact with the pipe (11) or the two pipes to be connected,
wherein the segments (13) are connected to a welding device (20) serving as electric current source (23) for the heating elements (17) via two electrical connecting lines (21, 22)
and each of the two connecting lines (21, 22) is coupled to one each of two connection lines (31, 32) at connecting points (24, 24') and with them forms a line combination (30, 30') for an electric parallel circuit of all the heating elements (17) in the accessory (10),
**characterised in that**
the segments (13) have on their outer faces two electrical coupling members (18, 19) for supplying and conducting away an electric current to or from the heating element (17) by means of the line combination (30, 30') carrying counter coupling members (28, 29) and the counter coupling members (28, 29) are contacted by the coupling members (18, 19) of different segments (13) of the accessory (10), wherein the coupling members (18, 19) and the counter coupling members (28, 29) are constructed differently from one another and are not compatible with one another.

2. Device according to claim 1, **characterised in that**, apart from the two counter coupling members (28, 29), the connection line (31, 32) also has a further coupling member (18'), by which a counter coupling member (28') of the connecting line (21, 22) of the welding device (20) is contacted during the welding process
and the connection (24, 25) of the connection line (31, 32) to the connecting line (21, 22) to the line combination (30, 30') is thereby produced.

3. Device according to claim 2, **characterised in that** the connection line (31, 32), though carrying a counter coupling member (28) on one of its ends, on its other end has a combined pair of coupling members (33), consisting on the one hand of a counter coupling member (29) for segment (13) and on the other hand of a coupling member (18') for the connecting line (21, 22).

4. Device according to one or more of claims 2 to 3, **characterised in that** the further coupling member (18') and the counter coupling member (29) of the connection line (31, 32) and also the one coupling member (18) on segment (13) and the counter coupling member (28') on each of the two connecting lines (21, 22) have a standard profile (34, 35) known per se,
but the other counter coupling member (29) of connection (24) and also the other coupling member (19) on segment (13) have a special profile (36, 37).

5. Device according to one or more of claims 1 to 4, **characterised in that** the two connection lines (31, 32) for the accessory (10) consisting of two segments (13) are combined into one module (40).

6. Device according to one or more of claims 1 to 5, **characterised in that** the two connection lines (31, 32) for the accessory (10) consisting of two segments (13) and/or their end members (28, 29; 33) are constructed differently from one another, in particular of different colours, for purposes of optical differentiation.

7. Device according to claim 5 or 6, **characterised in that** the module (40) of the combined connection lines (31, 32) is equipped with a graphic field (42) for information and/or with attachment points (43) for a tag with information.

8. Device according to one or more of claims 3 to 7, **characterised in that** the metal contact parts (26) in the two different coupling members (18, 19) of segment (13) together with the metal counter contacts (27) of the counter coupling members (28, 29) on the line combination (30, 30') contacting them have at least in summation in each case the same electrical resistance to one another.

9. Device according to claim 8, **characterised in that** the insulating parts formed from the plastics material of segment (13) on the coupling members (18, 19) of segment (13) on the one hand and the insulation parts of the counter coupling members (28, 29) on the line combination (30, 30') on the other hand have different profile forms (34 to 37) from one another, but can be plugged into one another in pairs (34, 35 or 36, 37).

## Revendications

1. Dispositif pour souder une robinetterie (10) en matériau thermoplastique sur un tuyau (11) ou sur deux tuyaux, en matériau thermoplastique, à relier entre eux,
sachant que la robinetterie (10) présente au moins 2 segments (13) comprenant la circonférence (12) du tuyau (11) et/ou des deux tuyaux à relier,
les segments (13), en contact au niveau de leurs surfaces intérieures (16) avec le tuyau (11) et/ou les deux tuyaux à relier, sont dotés au moins dans certaines zones d'un élément de chauffage (17) électrique,
sachant que les segments (13) sont reliés par le biais de deux cordons de branchement électrique (21, 22) avec un appareil à souder (20) servant de source de courant électrique (23) aux éléments chauffants (17),
et chacun des deux cordons de branchement (21, 22) étant couplé chacun avec l'une des deux lignes de jonction (31, 32) aux points de jonction (24, 24'), et qu'il forme avec elles une combinaison de lignes (30, 30') pour relier électriquement en parallèle tous les éléments chauffants (17) dans la robinetterie (10),
**caractérisé en ce que**
les segments (13) présentent, sur leurs surfaces extérieures, deux organes d'accouplement électriques (18, 19) servant à l'arrivée et à l'évacuation d'un courant électrique à l'élément chauffant (17) au moyen de la combinaison de ligne (30, 30') supportant les organes d'accouplement antagonistes (28, 29), et que les organes d'accouplement antagonistes (28, 29) sont en contact avec les organes d'accouplement (18, 19) de différents segments (13) de la robinetterie (10), sachant que les organes d'accouplement (18, 19) et les organes d'accouplement antagonistes (28, 29) présentent réciproquement une configuration différente et ne sont pas compatibles entre eux.

2. Dispositif selon la revendication 1, **caractérisé en ce que** la ligne de liaison (31, 32) possède, hormis les deux éléments d'accouplement antagonistes (28, 29), un autre organe d'accouplement (18') avec lequel est en contact, pendant la séquence de soudage, un organe d'accouplement antagoniste (28') du cordon de branchement (21, 22) de l'appareil à souder (20).
et **en ce qu'**ainsi est établie la jonction (24, 25) de la ligne de jonction (31, 32) avec le cordon de branchement (21, 22) pour donner la combinaison de lignes (30, 30').

3. Dispositif selon la revendication 2, **caractérisé en ce que** la ligne de liaison (31, 32) supporte certes en une extrémité un organe d'accouplement antagoniste (28), mais en l'autre extrémité un paire combinée (33) d'organes d'accouplement, composée d'une part d'un organe d'accouplement antagoniste (29) pour le segment (13) et d'autre part d'un organe d'accouplement (18') pour le cordon de branchement (21, 22).

4. Dispositif selon l'une ou plusieurs des revendications 2 à 3, **caractérisé en ce que** l'autre organe d'accouplement (18') et l'organe d'accouplement antagoniste (29) de la ligne de jonction (31, 32) ainsi que l'organe d'accouplement (18) situé contre le segment (13) et l'organe d'accouplement antagoniste (28') contre chacun des deux cordons de branchement (21, 22) présentent un profil normalisé (34, 35) connu en lui-même,
mais **en ce que** l'autre organe d'accouplement antagoniste (29) de la jonction (24) ainsi que l'autre élément d'accouplement (19) présentent au niveau du segment (13) un profil spécial (36, 37).

5. Dispositif selon l'une ou plusieurs des revendications 1 à 4, **caractérisé en ce que** les deux lignes de jonction (31, 32) sont rassemblées en une unité constructive (40) pour la robinetterie (10) se composant de deux segments (13).

6. Dispositif selon l'une ou plusieurs des revendications 1 à 5, **caractérisé en ce que** les deux lignes de jonction (31, 32) diffèrent l'une de l'autre pour la robinetterie (10) se composant de deux segments (13) et/ou leurs segments terminaux (28, 29 ; 33) aux fins d'une différenciation optique, et en particulier qu'elles présentent des couleurs différentes.

7. Dispositif selon la revendication 5 ou 6, **caractérisé en ce que** l'unité constructive (40) des lignes de jonction (31, 32) rassemblées est équipée d'un champ (42) dans lequel inscrire des informations et/ou de zones de fixation (43) d'une pancarte contenant des informations.

8. Dispositif selon l'une ou plusieurs des revendications 3 à 7, **caractérisé en ce que** les pièces métalliques de contact (26), dans les deux organes d'accouplement différents (18, 19) du segment (13), présentent avec les contacts antagonistes métalliques (27) des organes d'accouplement antagonistes (28, 29) avec lesquels ils sont en contact sur la combinaison de lignes (30, 30'), chaque fois la même résistance électrique réciproque au moins lorsque additionnées.

9. Dispositif selon la revendication 8, **caractérisé en ce que** les pièces d'isolation formées à partir de la matière plastique du segment (13) sur les organes d'accouplement (18, 19) du segment (13) d'une part, et les pièces d'isolation des organes d'accouplement antagoniste (28, 29) contre la combinaison de lignes (30, 30') d'autre part, présentent certes des formes de profil (34 à 37) réciproquement différentes, mais enfichables ensemble par paires (34, 35 et/ou 36, 37).
